# EUROPEAN PATENT APPLICATION

(11) **EP 4 591 967 A1**
(43) Date of publication of application: **30.07.2025**
(21) Application number: 24221607.5
(22) Date of filing: 19.12.2024
(51) Int. Cl.: B01D 47/02, C02F 1/32, F24F 8/22

(54) **AIR PURIFYING APPARATUS**

(30) Priority: 12.01.2024 KR 20240005555; 17.07.2024 KR 20240094676
(71) Applicant: MEDMONTS Co., Ltd., Seoul 07802 (KR)
(72) Inventor: PARK, Woo Sung, Seoul 08001 (KR); PARK, Ji Hong, Seoul 06376 (KR); PARK, Sun Hwa, Wonju-si, Gangwon-do 26417 (KR)
(74) Representative: Viering, Jentschura & Partner mbB Patent- und Rechtsanwälte

(57) **Abstract**

The present invention relates to an air purifying apparatus including a water tank in which water is accommodated in an inner storage space, a first tank part in which a first auxiliary space is formed, a second tank part which is provided on the water tank and in which an inner second auxiliary space vertically communicates with the storage space, a water purification filter part having a water purification filter therein to filter water and air, a first pumping part that is installed on a first connection line connecting the water tank and the first tank part and pumps the water in the storage space to the first auxiliary space, a second pumping part that is connected to the first tank part by a second connection line, filters external air, and then pumps the filtered air to the first auxiliary space, a third pumping part that is installed in a third connection line connecting the first tank part and the water purification filter part and pumps the water and the air in the first auxiliary space to the water purification filter part, a fourth pumping part that is installed in a fourth connection line connecting the water purification filter part and the water tank and inputs the water and the air passing through the water purification filter part to the storage space, and a fifth pumping part that is connected to the second tank part by a fifth connection line and pumps the air moved upward to an uppermost layer of the second auxiliary space to an outside of the second tank part.

## Description

### CROSS-REFERENCE TO RELATED APPLICATION

This application claims priority to and the benefit of Korean Patent Application No. 2024-0005555, filed on Jan 12, 2024, the disclosure of which is incorporated herein by reference in its entirety.

### BACKGROUND

### 1. Field of the Invention

The present invention relates to an air purifying apparatus, and more particularly, to an air purifying apparatus capable of filtering air in multiple stages and then discharging the filtered air to the outside.

### 2. Discussion of Related Art

In general, various air purifying apparatuses are used in homes or industrial sites. For example, in waste incinerators or factory chimneys, air purifying apparatuses are used to remove harmful substances or dust included in an exhaust gas.

Further, the air purifying apparatuses are used to maintain a clean environment at home, and various filters for purifying air are also installed in air conditioners, fan heaters, and vacuum cleaners. For example, in indoor areas in which very clean air quality is required, such as sterile rooms or laboratories, filter-type air purifying apparatuses are used to remove pathogenic bacteria or fine dust floating in indoor air.

However, since the air purifying apparatuses according to the related art have a purification structure that relies on a filter, a lifespan of the filter is not long. Further, bacteria may be reproduced in foreign substances collected in the filter or the foreign substances collected in the filter are scattered by an external force, and thus interiors of the apparatuses may be contaminated, and the apparatus is difficult to manage hygienically.

The related document related to the present invention is Korean Patent Publication No. 10-2022-0072844 (June 2, 2022), and air purifying apparatuses are disclosed in the related document.

### SUMMARY OF THE INVENTION

The present invention is directed to an air purifying apparatus capable of filtering air in multiple stages and then discharging the filtered air to the outside.

According to an aspect of the present invention, there is provided an air purifying apparatus including a water tank in which water is accommodated in an inner storage space, a first tank part in which a first auxiliary space is formed, a second tank part which is provided on the water tank and in which an inner second auxiliary space vertically communicates with the storage space, a water purification filter part having a water purification filter therein to filter water and air, a first pumping part that is installed on a first connection line connecting the water tank and the first tank part and pumps the water in the storage space to the first auxiliary space, a second pumping part that is connected to the first tank part by a second connection line, filters external air, and then pumps the filtered air to the first auxiliary space, a third pumping part that is installed in a third connection line connecting the first tank part and the water purification filter part and pumps the water and the air in the first auxiliary space to the water purification filter part, a fourth pumping part that is installed in a fourth connection line connecting the water purification filter part and the water tank and inputs the water and the air passing through the water purification filter part to the storage space, and a fifth pumping part that is connected to the second tank part by a fifth connection line and pumps the air moved upward to an uppermost layer of the second auxiliary space to an outside of the second tank part.

The air purifying apparatus may further include an ultraviolet sterilization part that is installed in the first connection line and radiates ultraviolet (UV) rays to the water moving to the first pumping part.

The air purifying apparatus may further include a plurality of partition plates which vertically partition the second auxiliary space and through which a plurality of passage holes vertically pass such that the air passes therethrough.

The air purifying apparatus may further include an air filter that is provided on an input side of the second pumping part and filters the air.

The fourth connection line may input the water and the air to a lower area of the second auxiliary space.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view illustrating an air purifying apparatus according to the present invention;
FIG. 2 is a perspective view illustrating a state in which a case and a cover are coupled to the air purifying apparatus according to the present invention;
FIG. 3 is a perspective view illustrating an installation state of a partition plate and a movement path of water and air in the air purifying apparatus according to the present invention;
FIG. 4 is a front view illustrating the air purifying apparatus according to the present invention;
FIG. 5 is a rear view illustrating cross-sectional views of a water tank, a first tank part, and a second tank part of the air purifying apparatus according to the present invention;
FIG. 6 is a right side view illustrating the air purifying apparatus according to the present invention; and
FIG. 7 is a plan view illustrating the air purifying apparatus according to the present invention.

### DETAILED DESCRIPTION OF EXEMPLARY EMBODIMENTS

Exemplary embodiments of the present invention will be described in detail below with reference to the accompanying drawings.

Advantages and features of the present invention and methods for achieving the same will become apparent with reference to embodiments described below in detail together with the accompanying drawings.

However, the present invention will not be limited by the embodiments disclosed below but will be implemented in various different forms, the embodiments are merely provided to ensure that the disclosure of the present invention is complete and to fully inform those skilled int the art to which the present invention pertains of the scope of the present invention, and the present invention is merely defined by the scope of the appended claims.

Further, when it is determined that the related known technology may make the subject matter of the present invention unclear in describing the present invention, a detailed description thereof will be omitted.

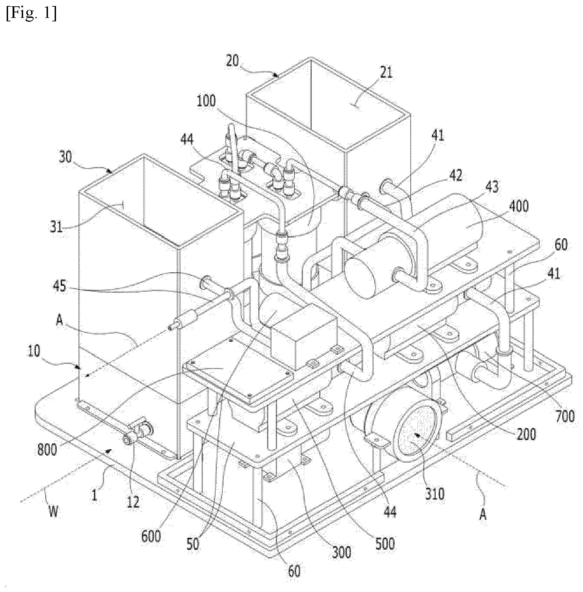

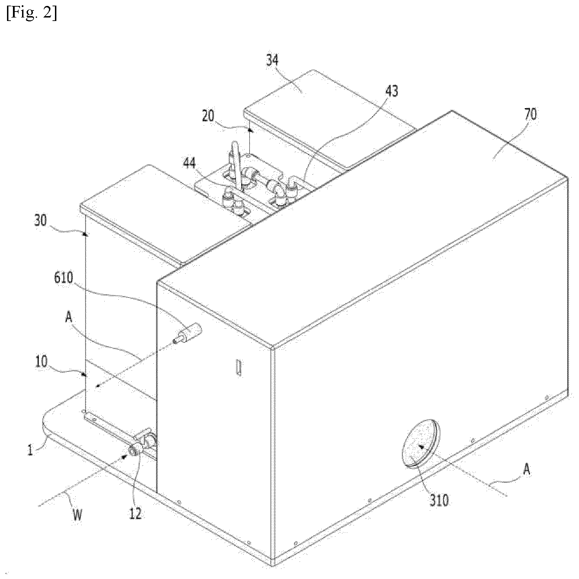

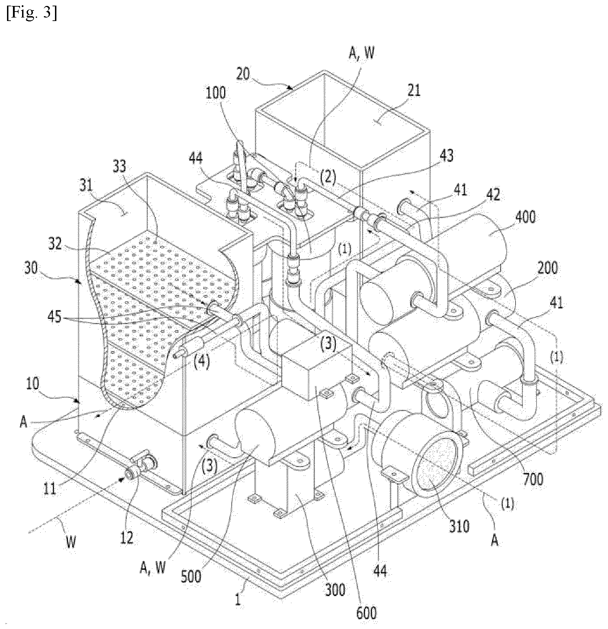

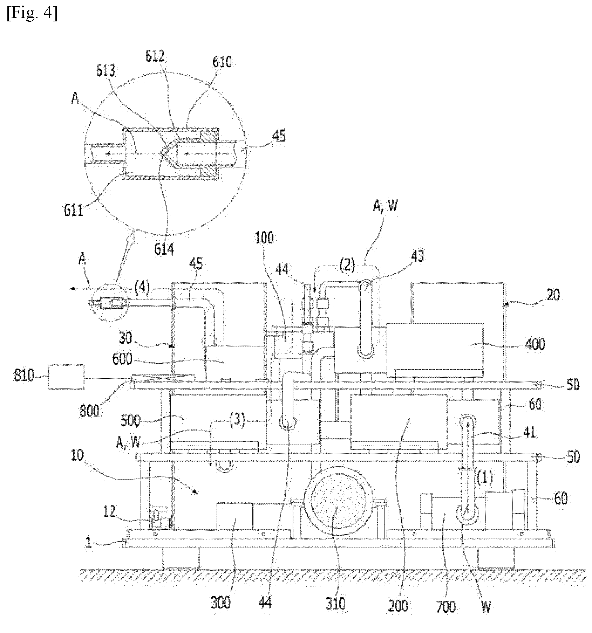

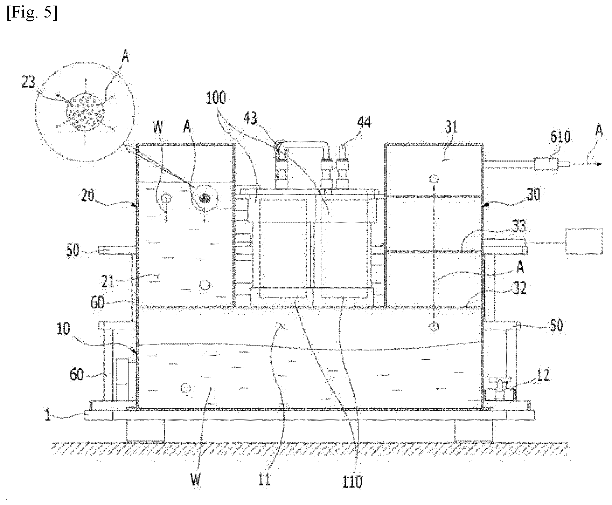

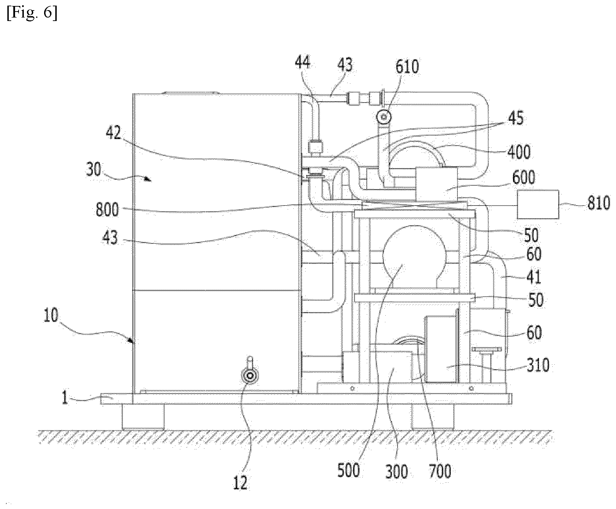

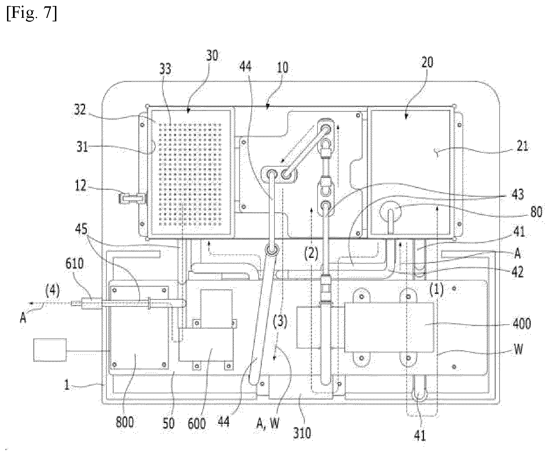

FIG. 1 is a perspective view illustrating an air purifying apparatus according to the present invention, FIG. 2 is a perspective view illustrating a state in which a case and a cover are coupled to the air purifying apparatus according to the present invention, FIG. 3 is a perspective view illustrating an installation state of a partition plate and a movement path of water and air in the air purifying apparatus according to the present invention, FIG. 4 is a front view illustrating the air purifying apparatus according to the present invention, FIG. 5 is a rear view illustrating cross-sectional views of a water tank, a first tank part, and a second tank part of the air purifying apparatus according to the present invention, FIG. 6 is a right side view illustrating the air purifying apparatus according to the present invention, and FIG. 7 is a plan view illustrating the air purifying apparatus according to the present invention.

Referring to FIGS. 1 to 7, an air purification device according to the present invention includes a base part 1, a water tank 10, a first tank part 20, a second tank part 30, a water purification filter part 100, a first pumping part 200, a second pumping part 300, a third pumping part 400, a fourth pumping part 500, a fifth pumping part 600, and a controller 800.

The base part 1 may have a quadrangular panel shape in which the base part 1 is horizontally seated on an installation surface, four perimetric surfaces thereof are formed at the same angle along edges thereof, and an upper surface and a lower surface thereof are formed horizontally, but the shape of the base part 1 may be variously applied as needed.

The water tank 10 has a storage space 11 having a predetermined volume and formed therein such that water W is stored and has a lower end horizontally coupled to an upper portion of the base part 1. The water tank 10 may have a hexahedral shape in which four perimetric surfaces along edges thereof are formed at the same angle and an upper surface and a lower surface thereof are formed horizontally, but the shape of the water tank 10 may be variously applied as needed, and an inlet/outlet pipe 12 for supplying and discharging the water W may be provided at the edge of the water tank 10 to be opened and closed.

The first tank part 20 has a first auxiliary space 21 having a predetermined volume and formed therein such that the water W and air A are input. A lower end of the first tank part 20 may be horizontally coupled to one side of an upper surface of the water tank 10, and a water level sensing unit 80 for sensing a water level may be provided inside the first auxiliary space 21.

Here, the first tank part 20 may have a hexahedral shape in which four perimetric surfaces along edges thereof are formed at the same angle and an upper surface and a lower surface thereof are formed horizontally, but the shape of the first tank part 20 may be variously applied as need.

The water level sensing unit 80 may sense the water level of the water W input into the first auxiliary space 21 and transmit a water level sensing signal to the controller 800, which will be described below, when the sensed water level deviates from a reference water level, and the controller 800 may stop driving of the first pumping part 200, which will be described below, when the water level sensing signal is transmitted from the water level sensing unit 80. If necessary, driving of the first pumping part 200, the second pumping part 300, the third pumping part 400, the fourth pumping part 500, and the fifth pumping part 600 may be simultaneously stopped.

Further, a first cover 22 may be coupled to an upper end of the first tank part 20 to be opened and closed as illustrated in FIG. 2. An edge of the first cover 22 may be horizontally seated on the upper end of the first tank part 20 and may have a structure in which a lower surface of the first cover 22 and the upper end of the first tank part 20 are coupled in a male-female manner although not illustrated.

The second tank part 30 has a second auxiliary space 31 having a predetermined volume and formed therein such that the water W and the air A are input thereinto and has a lower end horizontally coupled to the one side of the upper surface of the water tank 10, and a lower side of the second auxiliary space 31 vertically communicates with the storage space 11 of the water tank 10.

In this case, the second tank part 30 may be disposed at an upper portion of the one side of the water tank 10, the first tank part 20 may be disposed on the other side of the water tank 10 to face the second tank part 30, and an installation area may be formed between the first tank part 20 and the second tank part 30 such that the water purification filter part 100, which will be described below, may be disposed.

Here, the second tank part 30 may have a hexahedral shape in which four perimetric surfaces along edges thereof are formed at the same angle and an upper surface and a lower surface thereof are formed horizontally, but the shape of the second tank part 30 may be variously applied as needed, and the second tank part 30, the first tank part 20, and the water tank 10 may be arranged in a rear area of the base part 1.

Further, the second tank part 30 may further include a plurality of partition plates 32 that are horizontally installed inside the second auxiliary space 31, vertically partition the lower storage space 11 and the second auxiliary space 31, are arranged in a vertical direction while spaced apart from each other, and partition the second auxiliary space 31 into a plurality of spaces.

Further, a plurality of passages holes 33 may vertically pass through the partition plate 32 so that the air A input into the storage space 11 may move upward to an uppermost layer of the second auxiliary space 31. That is, when the water W and the air A are input into the storage space 11, the water W may be accommodated in the storage space 11, and the air A being present in the water W of the storage space 11 may move upward through the passage hole 33 and be discharged to the outside of the second tank part 30.

In addition, a second cover 34 may be coupled to an upper end of the second tank part 30 to be opened and closed as illustrated in FIG. 2. An edge of the second cover 34 may be horizontally seated on the upper end of the second tank part 30 and may have a structure in which a lower surface of the second cover 34 and the upper end of the second tank part 30 are coupled in a male-female manner although not illustrated.

The water purification filter part 100 may filter the water W and the air A, one or more (e.g., three) water purification filter parts 100 may be installed above the water tank 10, and the water purification filter part 100 may be disposed in an installation area formed between the first tank part 20 and the second tank part 30. Here, a water purification filter 110 for filtering the water W and the air A while the water W and the air A pass therethrough may be provided inside the water purification filter part 100.

One or more of upper ends and lower ends of the water purification filter parts 100 may be connected to each other by a connection pipe, the water W and the air A flowing into an input side may be discharged to an output side while passing through the water purification filter 110, and the water W and the air A passing through all the water purification filter parts 100 may be input into the storage space 11 of the water tank 10 through a fourth connection line 44, which will be described below.

The water purification filter 110 may selectively use a material (sediment, carbon block, or the like) for filtering out foreign substances (dust, or the like) included in the water W and the air A, and the water W and the air A passing through the water purification filter 110 may be discharged to the outside through an output side of the water purification filter part 100.

The first pumping part 200 is installed in a first connection line 41 connecting the water tank 10 and the first tank part 20 and pumps the water W in the storage space 11 to the first auxiliary space 21 of the first tank part 20.

The first connection line 41 has a passage passing therethrough in a longitudinal direction, and both sides of the first connection line in the longitudinal direction are coupled to a front surface of the water tank 10 and a front surface of the first tank part 20, respectively, to connect the storage space 11 and the first auxiliary space 21.

Further, the first pumping part 200 may be fixedly installed in a front area of the base part 1 to be located in front of the water tank 10, the first tank part 20, and the second tank part 30, and the first pumping part 200 may use a water pump of which an input side and an output side are connected to the first connection line 41.

Further, a deck 50 forming one or more layers may be provided in the front area of the base part 1 in a certain area such that a lower end of the first pumping part 200 may be fixedly coupled, and the deck 50 may be installed while spaced apart from the upper portion of the base part 1 by a support 60.

In addition, a plurality of ejection holes 23 may pass through, in a front-rear direction, the front surface of the first tank part 20 to which an output side of the first connection line 41 is connected as illustrated in FIG. 5. The ejection hole 23 is formed with a set diameter so that the air A input into the first auxiliary space 21 through the output side of the first connection line 41 is ejected in the form of fine microbubbles.

Meanwhile, the air purifying apparatus according to the present invention may further include one or more ultraviolet sterilization parts 700 that are installed on the first connection line 41 and radiate ultraviolet (UV) rays to the water W moving to the first pumping part 200, and the ultraviolet sterilization parts 700 may sterilize the water W moving by a pumping pressure of the first pumping part 200.

The ultraviolet sterilization part 700 may have a passage formed therein to allow the water W to pass therethrough, one or more ultraviolet lamps for radiating UV rays toward the water W when a light is turned on may be installed inside the passage, and the ultraviolet sterilization part 700 may be fixedly installed in the front area of the base part 1.

For example, when the first pumping part 200 is driven, the water W in the storage space 11 may move along the first connection line 41, pass through the passage of the ultraviolet sterilization part 700 and then be input to the first auxiliary space 21 through the first pumping part 200, and in this process, the water W passing through the passage is sterilized by UV rays, and thus harmful substances included in the water W can be removed.

The second pumping part 300 may further include an air filter 310 that is connected to the first tank part 20 by a second connection line 42, filters the external air A and then pumps the air A to the first auxiliary space 21, and filters the air A on an input side of the second pumping part 300 and moves the air A to the second pumping part 300.

Here, the second connection line 42 has a passage passing therethrough in the longitudinal direction, and both sides of the second connection line in the longitudinal direction are coupled to an output side of the air filter 310 and the front surface of the first tank part 20 to connect the air filter 310 and the first auxiliary space 21.

Further, the second pumping part 300 may be fixedly installed in the front area of the base part 1 to be located in front of the water tank 10, the first tank part 20, and the second tank part 30, the second pumping part 300 may use an air pump of which an input side and an output side are connected to the second connection line 42, and the air filter 310 may selectively use various filters to filter out foreign substances included in the air A.

Further, lower ends of the second pumping part 300 and the air filter 310 may be fixedly coupled to an upper surface of the base part 1 or an upper surface of the deck 50, the input side of the second pumping part 300 and the output side of the air filter 310 may be connected by a separate connection pipe, and an input side of the air filter 310 may be directed to the front side of the base part 1.

The third pumping part 400 is installed on a third connection line 43 connecting the first tank part 20 and the water purification filter part 100 and pumps the water W and the air A in the first auxiliary space 21 to the water purification filter part 100.

The third connection line 43 has a passage passing therethrough in the longitudinal direction, and both sides of the third connection line in the longitudinal direction are coupled to the front surface of the first tank part 20 and an input side of the water purification filter part 100 to connect the water purification filter part 100 and the first auxiliary space 21.

Further, the third pumping part 400 may be fixedly installed in the front area of the base part 1 to be located in front of the water tank 10, the first tank part 20, and the second tank part 30, and the third pumping part 400 may use a water pump of which an input side and an output side are connected to the third connection line 43.

Further, an output side of the third connection line 43 may be vertically connected to an input side formed at an upper end of the water purification filter part 100, and a lower end of the third pumping part 400 may be fixedly coupled to the upper surface of the base part 1 or the upper surface of the deck 50.

The fourth pumping part 500 is installed on the fourth connection line 44 connecting the water purification filter part 100 and the water tank 10 and moves the water W and the air A passing through the water purification filter part 100 and inputs the water W and the air A into the storage space 11.

The fourth connection line 44 has a passage passing therethrough in the longitudinal direction, and both sides of the fourth connection line in the longitudinal direction are coupled to the front surface of the water tank 10 and the output side of the water purification filter part 100 to connect the water purification part 100 and the storage space 11.

Further, the fourth pumping part 500 may be fixedly installed in the front area of the base part 1 to be located in front of the water tank 10, the first tank part 20, and the second tank part 30, and the fourth pumping part 500 may use a water pump of which an input side and an output side are connected to the fourth connection line 44. Here, a lower end of the fourth pumping part 500 may be fixedly coupled to the upper surface of the base part 1 or the upper surface of the deck 50.

In this case, the fourth connection line 44 may input the water W and the air A to a lower area of the second auxiliary space 31, and the air A input to the lower area of the second auxiliary space 31 is moved upward to the second auxiliary space 31 through the passage hole 33 of the partition plate 32 and then discharged to the outside through the fourth connection line 44, which will be described below.

That is, since the air A input to the storage space 11 through the fourth connection line 44 is moved upward to the uppermost layer of the second auxiliary space 31 after being present in the water W, the air A from which foreign substances are removed may be discharged to the atmosphere.

The fifth pumping part 600 is connected to the second tank part 30 by a fifth connection line 45 and pumps the air A moved upward to the uppermost layer of the second auxiliary space 31 to the outside of the second tank part 20.

The fifth connection line 45 has a passage passing therethrough in the longitudinal direction, one side of the fifth connection line in the longitudinal direction is coupled to a front surface of the second tank part 20, and an opposite side of the fifth connection line is exposed to the atmosphere. In this case, the fifth connection line 45 may discharge the air A in the second auxiliary space 31 to the atmosphere by a pumping pressure of the fifth pumping part 600.

Further, the fifth pumping part 600 may be fixedly installed in the front area of the base part 1 to be located in front of the water tank 10, the first tank part 20, and the second tank part 30, and the fifth pumping part 600 may use an air pump of which an input side and an output side are connected to the fifth connection line 45. Here, a lower end of the fifth pumping part 600 may be fixedly coupled to the upper surface of the base part 1 or the upper surface of the deck 50.

Further, a back flow preventing member 610 for preventing back inflow of the air A may be further coupled to an output side of the fifth connection line 45 as illustrated in FIG. 4. An input side of the back flow preventing member 610 may be connected to the output side of the fifth connection line 45, and may have an inner passage 611 passing therethrough in the front-rear direction.

In addition, the back flow preventing member 610 may further include a protrusion pipe 612 which protrudes forward from a rear surface of the passage 611 and through which an inner through-hole passes in the front-rear direction to communicate with the passage of the fifth connection line 45, an opening or closing hole 613 which protrudes forward from a front end of the protrusion pipe 612 and of which widths on opposite sides gradually decrease as they go forward, and a cut hole 614 formed at a front end of the opening or closing hole 613, cut in a direction perpendicular a direction in which a width of the opening or closing hole 613 decreases, and having a length in a cutting direction.

For example, when the air A flows through a rear side of the passage 611, the air A moved into the opening or closing hole 613 is discharged to a front side of the protrusion pipe 612 while opening the cut hole 614 in a width direction, and the air A discharged through the front side of the protrusion pipe 612 is discharged to a front side of the back flow preventing member 610 through a front area of the passage 611.

In this case, the opening or closing hole 613 has a shape of which widths on opposite sides decrease as they go forward, and thus when the air A flows back to the front side of the passage 611, the cut hole 614 is not open to opposite sides in the width direction and maintains a close contact state. That is, since the air A moves only in a discharge direction of the back flow preventing member 610, the air A does not flow back to the second auxiliary space 31.

The controller 800 may be configured to control driving of the first pumping part 200, the second pumping part 300, the third pumping part 400, the fifth pumping part 500, and the ultraviolet sterilization part 700 and may be electrically connected to an external power supply unit (not illustrated), and an operation unit 810 may be electrically connected to the controller 800 to allow a user to turn the first pumping part 200, the second pumping part 300, the third pumping part 400, the fifth pumping part 500, and the ultraviolet sterilization part 700 on/off.

Meanwhile, an upper side of the front area of the base part 1 may be covered by a case 70. A lower end of the case 70 may be coupled to an edge side of a front area, the first pumping part 200, the second pumping part 300, the third pumping part 400, the fifth pumping part 500, the ultraviolet sterilization part 700, and the controller 800 may be located in an inner space of the case 70, and the output side of the air filter 310 and an output side of the back flow preventing member 610 may be exposed through the cut hole formed on a front surface and one side surface of the case 70.

For example, when the first pumping part 200, the second pumping part 300, the third pumping part 400, the fifth pumping part 500, and the ultraviolet sterilization part 700 are switched to an ON state using the operation unit 810 of the controller 800, the water W in the storage space 11 is input to the first auxiliary space 21 by the pumping pressure of the first pumping part 200, and at the same time, the air A in the atmosphere is input to the first auxiliary space 21 through the air filter 310 by a pumping pressure of the second pumping part 300. In this process, the water W moving along the first connection line 41 is sterilized by the ultraviolet sterilization part 700.

Next, after the water W and the air A in the first auxiliary space 21 are input into the input side of the water purification filter part 100 by a pumping pressure of the third pumping part 400, the water W and the air A passing through the water purification filter part 100 are re-input to the storage space 11 by a pumping pressure of the fourth pumping part 500, the air A input to the lower area of the second auxiliary space 31 is moved upward to an uppermost layer of the first auxiliary space 31 through the passage hole 33 of the partition plate 32, and the air A in the first auxiliary space 31 is discharged into the atmosphere due to the pumping pressure generated by the fifth pumping part 600.

As a result, in the present invention, since the air A suctioned from the outside is filtered in multiple stages, air purification performance may be improved, since the water W is sterilized and input together with the water W, harmful substances included in the water W may be removed, and since collected foreign substances (dust or the like) are not discharged, the apparatus is easy to manage hygienically.

Until now, detailed embodiments of the air purifying apparatus according to the present invention have been described, but it is obvious that various modifications may be made without departing from the scope of the present invention.

According to the present invention, since air suctioned from the outside is filtered in multiple stages, air purification performance may be improved, since water is sterilized and input together with the water, harmful substances included in the water W may be removed, and since collected foreign substances (dust or the like) are not discharged, the apparatus is easy to manage hygienically.

Therefore, the scope of the present invention should not be limited to the described embodiments and should be determined not only by the appended claims but also by equivalents to the appended claims.

That is, the above-described embodiment should be understood to be exemplary and not limited in all respects, the scope of the present invention should be represented by the appended claims rather than the detailed description, and it should be interpreted that all changes and modifications derived from the meaning and scope of the appended claims and the equivalent concept thereto are included in the scope of the present invention.

## Claims

1. An air purifying apparatus comprising:
a water tank in which water is accommodated in an inner storage space;
a first tank part in which a first auxiliary space is formed;
a second tank part which is provided on the water tank and in which an inner second auxiliary space vertically communicates with the storage space;
a water purification filter part having a water purification filter therein to filter water and air;
a first pumping part installed on a first connection line connecting the water tank and the first tank part and configured to pump the water in the storage space to the first auxiliary space;
a second pumping part connected to the first tank part by a second connection line and configured to filter external air and then pump the filtered air to the first auxiliary space;
a third pumping part installed in a third connection line connecting the first tank part and the water purification filter part and configured to pump the water and the air in the first auxiliary space to the water purification filter part;
a fourth pumping part installed in a fourth connection line connecting the water purification filter part and the water tank and configured to input the water and the air passing through the water purification filter part to the storage space; and
a fifth pumping part connected to the second tank part by a fifth connection line and configured to pump the air moved upward to an uppermost layer of the second auxiliary space to an outside of the second tank part.

2. The air purifying apparatus of claim 1, further comprising an ultraviolet sterilization part installed in the first connection line and configured to radiate ultraviolet (UV) rays to the water moving to the first pumping part.

3. The air purifying apparatus of claim 1, further comprising a plurality of partition plates which vertically partition the second auxiliary space and through which a plurality of passage holes vertically pass such that the air passes therethrough.

4. The air purifying apparatus of claim 1, further comprising an air filter provided on an input side of the second pumping part and configured to filter the air.

5. The air purifying apparatus of claim 1, wherein the fourth connection line inputs the water and the air to a lower area of the second auxiliary space.
